Europäisches Patentamt

European Patent Office    (11) Publication number:    **0 303 080**

Office européen des brevets    **A1**

## EUROPEAN PATENT APPLICATION

(21) Application number: 88111735.2    (51) Int. Cl.4: **H01R 17/12 , H02G 3/06**

(22) Date of filing: **21.07.88**

(30) Priority: **10.08.87 FR 8711372**

(43) Date of publication of application:
**15.02.89 Bulletin 89/07**

(84) Designated Contracting States:
**DE GB IT**

(71) Applicant: **ITT COMPOSANTS ET INSTRUMENTS**
**157, rue des Blains**
**F-92220 Bagneux (Hautes de Seine)(FR)**

(72) Inventor: **Bricaud, Hervé**
**1, rue St. Bernard**
**F-31000 Toulouse(FR)**
Inventor: **Lescoat, Jean-François**
**14, rue de Plumont**
**F-39000 Dole(FR)**

(74) Representative: **Morstadt, Volker, Dipl.-Ing.**
**c/o Deutsche ITT Industries GmbH**
**Patent/Lizenzabteilung Postfach 840**
**Hans-Bunte-Strasse 19**
**D-7800 Freiburg/Brsg.(DE)**

(54) **Electrical connection device.**

(57) The invention relates to a device 12 for connecting a cable to the rear wiring face of an electrical connector 10, of the type comprising a cylindrical wiring chamber 16 equipped, on its front face turned towards the said wiring face, with a ring which is intended for fastening to the body of the electrical connector and which is mounted so to rotate freely relative to the wiring chamber and has an internal thread of a diameter equal to the diameter of the external thread 20 of the electrical connector.

According to the invention, the device has an enlarging bush 14 having a cylindrical body 22, on the front end of which the said fastening ring 24 is fitted and the inside diameter of which increases from its front end towards its rear end.

FIG.1

## Electrical connection device

The subject of the present invention is a device for connecting a cable to the rear wiring face of an electrical connector.

There are various known connection devices of the type comprising a cylindrical wiring chamber equipped, on its front face turned towards the wiring face of the electrical connector, with a ring which is intended for fastening to the body of the electrical connector and which is mounted freely in terms of rotation relative to the wiring chamber and has an internal thread of a diameter equal to the diameter of the external thread of the electrical connector.

In this type of connection, the diametral space available for carrying out the delicate operations of electrical connection to the rear face of the electrical connector is particularly confined, since the inside diameter of the wiring chamber is equal to the inside diameter of the body of the electrical connector.

The object of the invention is to provide a connection device which makes it possible to ensure a considerable enlargement of the inner wiring chamber of the connection and to increase the cable lead-through orifice for the wiring operation which is carried out from the rear of the body of the electrical connector.

To achieve this, the invention provides a connection device characterized in that it has an enlarging bush comprising a cylindrical body, on the front end of which the fastening ring is fitted and the inside diameter of which increases from its front end towards its rear end.

According to another characteristic of the invention, the intermediate bush has a portion of conical inner profile which is arranged near its front end and of which the small diameter is substantially equal to the inside diameter of the body of the electrical connector and the large diameter is substantially equal to the inside diameter of the wiring chamber fastened to it by screwing.

To make it possible to screw the wiring chamber to the enlarging bush, the latter is equipped, near its rear end, with an external thread which interacts with the internal thread of the wiring chamber.

Interposing an enlarging bush between the body of the electrical connector and the wiring chamber makes it possible to increase considerably the space available at the rear face of the electrical connector for carrying out the electrical connection operations there. The diameters of the internal and external threads of the connecting bush are selected from the series of standard diameters used in standardized electrical connectors of conventional design, so that it is possible to use standard components, such as the wiring chamber, without modifying the rear part of the body of the electrical connector.

According to another characteristic of the invention, the cylindrical body of the enlarging bush has axial teeth formed at its front end and interacting with corresponding axial teeth formed at the rear end of the body of the electrical connector, in order to immobilize the body of the enlarging bush in terms of rotation, relative to that of the electrical connector.

This arrangement makes it possible to utilize the axial teeth provided as standard in the rear part of the electrical connector, in order to immobilize the conventional wiring chambers, for the purpose of immobilizing the enlarging bush in terms of rotation, after its fastening ring has been fitted and clamped on the rear part of the body of the electrical connector.

The wiring chambers a standard type currently used have means for the radial clamping of the electrical cable, intended for immobilizing it in terms of translational movement relative to the wiring chamber and controlled as result of the rotation of the wiring chamber in relation to the body of the electrical connector during screwing of the said wiring chamber.

According to the invention, the wiring chamber is equipped with means for the radial clamping of the electrical cable, which comprise a clamping collar mounted freely in terms of rotation and translational movement inside the wiring chamber and equipped with axial teeth formed at its front end and interacting with corresponding axial teeth formed at the rear end of the body of the enlarging bush, in order to immobilize the clamping collar in terms of rotation relative to the enlarging bush during the operation of screwing the wiring chamber to the rear end of the body of the enlarging bush.

The invention also makes it possible to produce connection devices bent at a specific angle relative to the axis of the electrical connector. To this end, the connection device is characterized in that it possesses a bent intermediate sleeve which is arranged between the body of the enlarging bush and the wiring chamber and of which the rear end is equipped with an external thread matching the internal thread of the wiring chamber and the front end has an internal thread matching the external thread of the enlarging bush.

According to another characteristic of the invention, the internal thread of the bent intermediate sleeve is formed in a connecting ring which is similar to the fastening ring of the enlarging bush and which is mounted freely in terms of rotation on the front end of the bent sleeve, the latter end being equipped with the axial teeth interacting with the corresponging axial teeth formed at the rear end of the body of the enlarging bush, in order to immobilize the bent intermediate sleeve in terms of rotation relative to the body of the enlarging bush according to a desired angular orientation about the axis of the connector.

When the wiring chamber has a device for the axial clamping of the cable, the rear end of the bent intermediate sleeve is equipped with axial teeth interacting with the corresponding axial teeth formed at the front end of the clamping collar, in order to immobilize the latter in terms of rotation relative to the bent intermediate sleeve during the operation of screwing the wiring chamber to the rear end of the bent sleeve.

Other characteristics and advantages of the invention will emerge from a reading of the following detailed description, and to understand this reference will be made to the accompanying drawings in which:

- Figure 1 is a view in partial axial section of a connection device according to the invention, shown in the position fitted to the rear of the body of an electrical connector;

- Figure 2 is a view on an enlarged scale of a detail of the embodiment of the wiring chamber of the connection device of Figure 1;

- Figure 3 is a view in partial axial section of the body of the electrical connector and of the enlarging bush which are shown in the detached position; and

- Figure 4 is a view in partial axial section of a bent connection device produced according to the teaching of the invention.

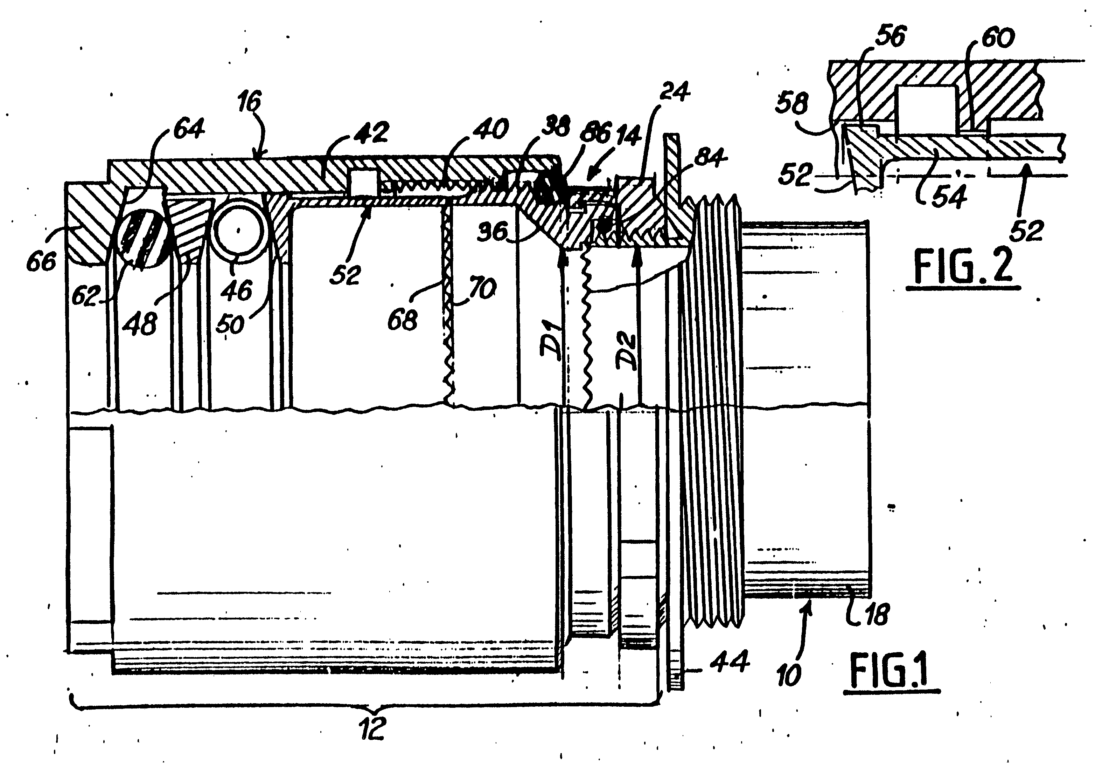

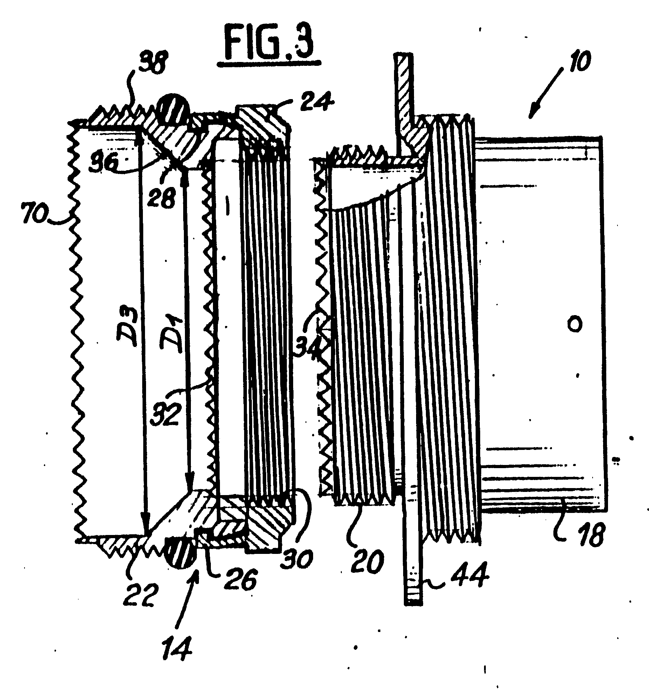

Figures 1 and 3 illustrate an electrical connector 10, on the rear end of which, on the left as seen in Figure 1, is fitted a connection device 12 according to the invention.

The connection device 12 comprises an enlarging bush 14 and a cylindrical wiring chamber 16.

The body of the electrical connector 10 is intended for receiving a block of insulating material (not shown), in which are mounted several electrical contact elements, to which the electrical wires of an electrical cable (not shown) are connected via the rear wiring face of the electrical connector 10. The body 18 of the electrical connector 10 is equipped, near its rear end, with an external thread 20, onto which the enlarging bush 14 is screwed.

The enlarging bush 14 is made in two parts and comprises a main body 22, on which a fastening ring 24 is mounted freely in terms of rotation. The fastening ring 24 is mounted on the body 22 as a result of the radial crimping of a turned-down axial edge 26 which interacts with a radial groove 28 made in the outer peripheral surface of the body 22 of the enlarging bush 14.

The fastening ring 24 has an internal thread 30, the diameter of which is equal to the standardized diameter of the external thread 20 of the electrical connector 10.

The fastening ring 24 can therefore be screwed to the rear end of the electrical connector 10, in order to ensure that the enlarging bush 14 is mounted on the latter. As can be seen in Figures 1 and 2, the body 22 of the enlarging bush has axial teeth 32 formed at its front end, towards the right as seen in Figures, and, when the bush 14 is screwed onto the electrical connector 10, interacting with corresponding axial teeth 34 formed at the rear end of the body 18 of the electrical connector, in order to immobilize the body of the enlarging bush 14 in terms of rotation relative to that of the electrical connector 10.

It should be noted that the axial teeth 34 for immobilization in terms of rotation are teeth provided as standard on the bodies of electrical connectors available on the market.

It can easily be appreciated that, simply by positioning the fastening ring 24 and then tightening it, the enlarging bush 14 is easily mounted on the rear face of the electrical connector 10, and that the cylindrical body 22 of the enlarging bush is immobilized permanently relative to the electrical connector 10 in terms of rotation.

According to the invention, the inside diameter of the enlarging bush 14 increases from its front end towards its rear end.

The embodiment illustrated in the Figures, the body 22 of the enlarging bush has a portion of conical inner profile 36 which is arranged near its front end. The small diameter D1 of the conical portion 36 is substantially equal to the standardized inside diameter D2 of the body of the electrical connector 10. This can be seen in Figure 1, when the two components are fastened to one another, the conical portion 36 directly extends the inside diameter D2 of the body 18 of the electrical connector 10. The large diameter D3 of the conical portion 36 is substantially equal to inside diameter of the wiring chamber 16 which is fastened to it by screwing.

The diameters D1 and D3 are selected so as to correspond to standardized connection sizes for electrical connectors.

The body 22 of the enlarging bush 14 is equipped, near its rear end, on the left as seen in Figures 1 and 3, with an external thread 38 which interacts with an internal thread 40 made in the inner cylindrical wall of the main body 42 of the wiring chamber 16. Given the choice of standardized diameters for the various threads, it is therefore possible to use a wiring chamber which is intended in a conventional way for mounting on the rear part of an electrical connector and which is of larger size than the electrical connector 10, on which the connection operation is carried out. However, as can be seen in Figures 1 and 3, the outer diametral overall dimension of the wiring chamber 16 does not exceed that of the body 18 of the electrical connector 10, the largest dimension of which is that of its outer radial bearing shoulder 44; it is also less than the largest diameter of the locking ring for the plug (not shown) fitting the electrical connector.

The wiring chamber 16 consists of a cylindrical main body 42, inside which are arranged means for the radical clamping of the electrical cable, which are controlled as a result of the rotation of the wiring chamber 16 during its mounting on the enlarging bush 14 by screwing.

The means for radial clamping consist of annular coiled helical spring 46 which is mounted inside the wiring chamber 16 between a washer with inclined faces 48 and the rear inclined face 50 of an inner clamping collar 52. The inner clamping collar 52, the functioning of which will be explained later, is mounted freely in terms of rotation and translational movement inside the wiring chamber 16.

As can be seen from Figure 2, the cylindrical body 54 of the inner clamping collar 52 is equipped, at its rear end, with a radial shoulder 56 which can slide and rotate with play in the inner bore 58 in the body 42 of the wiring chamber 16. However, the diameter of the radial shoulder 56 is slightly greater than the diameter of an inner radial shoulder 60 of the bore 58 in the wiring chamber 16, in order, by means of the clamping collar 52, to retain the radial clamping means inside the wiring chamber 16 when the latter is not in the position mounted on the enlarging bush 14. The mounting of the clamping collar 52 inside the wiring chamber 16 is carried out, after the clamping spring 46 and the washer with inclined faces 48 have been installed, by introducing the outer radial shoulder 56 of the clamping collar 52 forcibly onto the inside of the inner radial shoulder 60 of the wiring chamber 16.

The wiring chamber 16 also has an 0-ring seal 62 which is arranged between an inclined face 64 of the bottom 66 of the wiring chamber 16 and the opposite inclined face of the washer 48. In the embodiment illustrated in the Figures, only single clamping spring 46 has been shown, but it is possible to fit a second clamping spring by means of a second washer with inclined faces, which is located between the two springs and which, like the first washer 48, is capable of sliding axially inside the wiring chamber 16 during the operation of clamping the outer sheath of the cable.

In order to immobilize the clamping collar 52 in terms of rotation relative to the enlarging bush 14 during the operation of screwing the body 42 of the wiring chamber 16 onto the external thread 38 of the enlarging bush 14, the collar 52 is equipped with axial teeth 68 interacting with corresponding axial teeth 70 formed at the rear end of the body of the enlarging bush 40.

The connection device just described with reference to Figures 1 to 3 is used in the following way:

During a first operation, the enlarging bush 14 is fastened to the body 18 of the electrical connector 10 by screwing the fastening ring 24 onto the external thread 20 of the electrical connector 10.

The cylindrical wiring chamber 16, inside which the clamping means have previously been mounted and are held in place by means of the clamping collar 52, is subsequently slipped over the electrical cable which is to be connected to the rear wiring face of the electrical connector 10. The user then carries out the electrical connection operations in a zone having a diametral orifice D3 considerably larger than the standard orifice D1.

When all the electrical connection operations have been carried out, the operator slides the wiring chamber 16 towards the enlarging bush 14 over the outer sheath of the electrical cable and then proceeds to screw it onto the external thread 38 formed on the rear part of the body 22 of the enlarging bush 14. During this screwing, the clamping collar 52 shifts in a translational movement relative to the body 22 of the enlarging bush 14, until the opposing axial teeth 68 and 70 of the two components mesh with one another and assume the position shown in Figure 1.

From this position, if the operator continues screwing the wiring chamber 16 onto the body 22 of the enlarging bush 14, this results in a progressive tightening of the spring 46 which is compressed progressively and radially between the inclined face 50 of the clamping collar 52 and the opposite inclined face of the washer 48, until this causes maximum clamping of the sheath of the electrical cable and therefore the axial immobilization of the latter relative to the connection device 12 as a whole.

The connection device according to the invention makes it possible to ensure a particularly easy disconection, without the destruction of any component, especially for the purpose of repairing one of the wires of the cable, the large inner space available making it possible to connect a portion of new wire in parallel with the damaged wire.

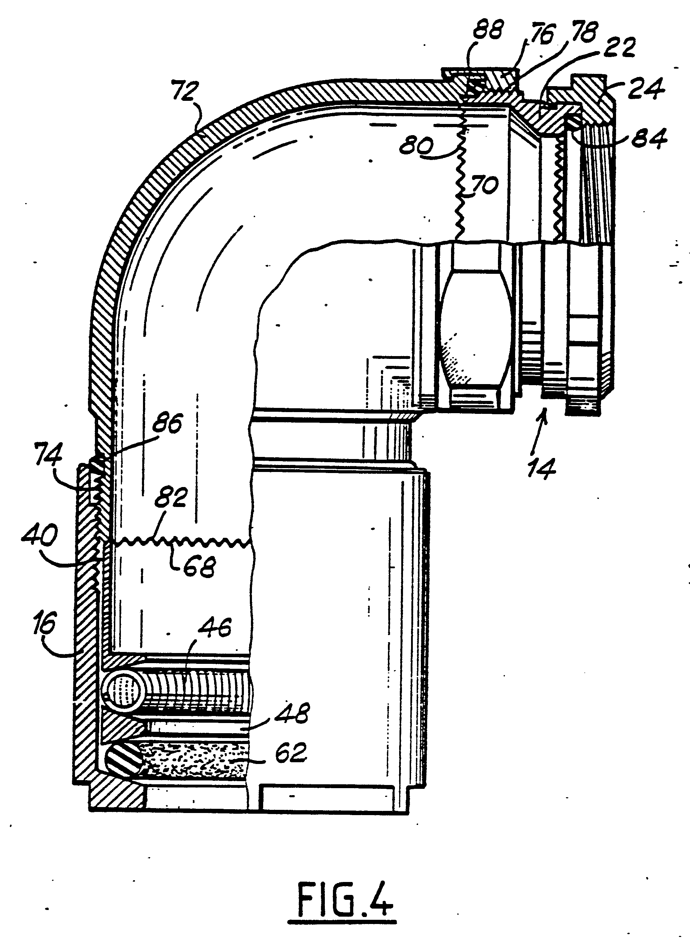

Figure 4 illustrates a connection device which is similar to that just described with reference to Figures 1 to 3, but which, according to the invention, posesses a bent intermediate sleeve 72.

Here, the bent sleeve 72 is a sleeve bent at 90°, and it is arranged between the body 22 of the enlarging bush 14 and the wiring chamber 16. These two latter comcomponents are identical to those used for a straight connection device, such as that shown in Figures 1 to 3. The rear end of the bent intermediate sleeve 72 is equipped with an external thread 74 matching the internal thread 40 of the wiring chamber 16. The front end of the bent sleeve 72 is equipped with a connecting ring 76 which is similar to the connecting ring 24 of the enlarging bush 14 and which has an internal therad 78 matching the external thread 38 formed on the rear part of the enlarging bush 14.

In order to immobilize the bent intermediate sleeve 72 in terms of rotation relative to the body 22 of the enlarging bush 14, the front end of the bent sleeve 72 is equipped with axial teeth 80 interacting with corresponding axial teeth 70 of the enlarging bush 14. This interaction of the axial teeth 70 and 80 thus makes it possible to fasten an immobilize the bent sleeve 72 in a desired angular position relative to the electrical connector 10, after the connecting ring 76 has been tightened.

To ensure that the means for clamping the cable which are located inside the wiring chamber 16 function properly, the rear end of the intermediate sleeve 72 is equipped with axial teeth 82 interacting, in the same way as the axial teeth 68 of the enlarging bush 14, with the corresponding axial teeth 68 formed on the clamping collar 52.

Other angles, such as, for example, 45°, can be obtained by using a corresponding bent sleeve, the other characteristics of which are identical to those of the sleeves 72 bent at 90°.

The bent connection device just described is used and is fitted on the electrical connector 10 in a way similar to that of the above-described straight connection device, that is to say by carrying out in succession the mounting of the enlarging bush 14, the electrical connection operations, the mounting of the bent intermediate sleeve 72 previously slipped over the electrical cable, and finally the mounting of the cylindrical wiring chamber 16.

Where a straight connection device is concerned, sealing is ensured by means of a first inner 0-ring 84 arranged inside the bush 14 and ensuring sealing between the latter and the connector, and by a second outer 0-ring 86 arranged on the peripheral wall of the bush 14 and ensuring sealing between the bush and the wiring chamber 16. The 0-rings 84 and 86 are likewise used for sealing the bent connection device, the outer 0-ring 86 being shifted to the rear end of the bent sleeve 72. Sealing is completed by means of a second inner 0-ring 88 which ensures sealing between the bush 14 and the bent sleeve 72.

## Claims

1. Device (12) for connecting a cable to the rear wiring face of an electrical connector (10), of the type comprising a cylindrical wiring chamber (16) equipped, on its front face turned towards the said wiring face, with a ring which is intended for fastening to the body of the electrical connector and which is mounted freely in terms of rotation relative to the wiring chamber and has an internal thread of a diameter equal to the diameter of the external thread (20) of the electrical connector, characterized in that it has an enlarging bush (14) comprising a cylindrical body (22), on the front end of which the said fastening ring (24) is fitted and the inside diameter (D1, D3) of which increases from its front end towards its rear end.

2. Connection device according to Claim 1, characterized in that the enlarging bush (14) has a portion (36) of conical inner profile which is arranged near its front end and of which the small diameter (D1) is substantially equal to the inside diameter (D2) of the body of the electrical connector and the large diameter (D3) is substantially equal to the inside diameter of the wiring chamber (16) which is screwed to it.

3. Connection device according to one of Claims 1 or 2, characterized in that the enlarging bush (14) is equipped, near its rear end, with an external thread (38) which interacts with an internal thread (40) of the wiring chamber (16).

4. Connection device according to any one of Claims 1 to 3, characterized in that the cylindrical body (22) of the enlarging bush (14) has axial teeth (32) formed at its front end and interacting with corresponding axial teeth (34) formed at the rear end of the body (18) of the electrical connector, in order to immobilize the body (22) of the enlarging bush in terms of rotation relative to that (18) of the electrical connector.

5. Connection device according to any one of Claims 1 to 4, characterized in that the wiring chamber (16) is equipped with means for the radial clamping of the electrical cable which comprise a clamping collar (52) mounted freely in terms of rotation and translational movement inside the wiring chamber and equipped with axial teeth (68) formed at its front end and interacting with corresponding axial teeth (70) formed at the rear end of the body (22) of the enlarging bush, in order to immobilize the clamping collar (52) in terms of rotation relative to the enlarging bush (14).

6. Connection device according to any one of the preceding claims, characterized in that it comprises a bent intermediate sleeve (72) which is arranged between the body (22) of the enlarging bush and the wiring chamber (16) and of which the rear end is equipped with an external thread (76) matching the internal thread (40) of the wiring chamber (16) and the front end has an internal thread (78) matching the external thread (38) of the enlarging bush (14).

7. Connection device according to Claim 6 taken in combination with Claim 5, characterized in that the internal thread (78) of the bent intermediate sleeve (72) is formed in a connecting ring (76) mounted freely in terms of rotation on the front end of the bent sleeve, and in that the latter end is equipped with axial teeth (80) interacting with the corresponding axial teeth (70) formed at the rear end of the body (22) of the enlarging bush, in order to immobilize the bent intermediate sleeve (72) in terms of rotation relative to the body of the enlarging bush (14).

8. Connection device according to Claim 6 taken in combination with Claim 5, characterized in that the rear end of the bent intermediate sleeve (72) is equipped with axial teeth (82) interacting with the cooresponding axial teeth (68) formed at the front end of the clamping collar (52), in order to immobilize the latter in terms of rotation relative to the bent intermediate sleeve (72).

FIG. 2

FIG. 1

EP 0 303 080 A1

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 115 626 (HAWKE) <br> * Page 1, lines 34-65; figure 1 * <br> --- | 1-4 | H 01 R  17/12 <br> H 02 G   3/06 |
| A | US-A-4 464 000 (WERTH et al.) <br> * Column 2, line 60 - column 3, line 35; figure 1 * <br> --- | 1,4,5,7,8 | |
| A | US-A-3 747 960 (BAWA) <br> * Column 3 - column 5, line 9; Figures 1,2 * <br> ----- | 1,6-8 | |

TECHNICAL FIELDS SEARCHED (Int. Cl.4)

H 01 R   17/00
H 02 G    3/00
H 02 G   15/00
H 01 R   13/00

The present search report has been drawn up for all claims

| Place of search | Date of completion of the search | Examiner |
|---|---|---|
| THE HAGUE | 07-10-1988 | TAPPEINER R. |

EPO FORM 1503 03.82 (P0401)